# EUROPEAN PATENT APPLICATION

(11) **EP 3 287 309 A1**
(43) Date of publication of application: **28.02.2018**
(21) Application number: 16782828.4
(22) Date of filing: 18.01.2016
(51) Int. Cl.: B60K 26/02, B62D 1/02, B60L 15/00

(54) **STEERING WHEEL, AND VEHICLE CONTROL DEVICE AND CONTROL METHOD WHICH USE STEERING WHEEL**

(30) Priority: 20.04.2015 JP 2015085544
(71) Applicant: Fomm Corporation, Kawasaki-shi, Kanagawa 212-0032 (JP)
(72) Inventor: TSURUMAKI, Hideo, Kawasaki-shi Kanagawa 212-0032 (JP); OHTONARI, Yukinori, Kawasaki-shi Kanagawa 212-0032 (JP); MORITA, Takayuki, Kawasaki-shi Kanagawa 212-0032 (JP); ARAI, Joe, Kawasaki-shi Kanagawa 212-0032 (JP); SAWADE, Yoshiaki, Kaga-shi Ishikawa 922-8686 (JP); AKITA, Hironori, Kaga-shi Ishikawa 922-8686 (JP)
(74) Representative: TBK
(86) International application number: PCT/JP2016/051274
(87) International publication number: WO 2016/170806

(57) **Abstract**

A steering wheel includes: a base part 11 that is connected to a steering shaft for adjusting a steering angle of a wheel; left spoke parts 12L that are fixed to the base part 11 and extend in the left direction; right spoke parts 12R that are fixed to the base part 11 and extend in the right direction; a left grip bar part 13L that is fixed to the left spoke parts 12L; a right grip bar part 13R that is fixed to the right spoke parts 12R; and an accelerator grip lever 14L/ 14R that is operated in a state holding one grip bar part 13L/ 13R of the left grip bar part 13L and the right grip bar part 13R when a driver adjusts driving force for the wheel.

## Description

### TECHNICAL FIELD

The present invention relates to a steering wheel, and a control device and a control method of a vehicle using the steering wheel.

### BACKGROUND ART

The inventors are currently developing an ultra-compact electric vehicle using in-wheel motors. Conventionally, an accelerator pedal and a brake pedal are arranged side by side in both engine vehicles and electric vehicles. As described in JP2013-193705A, the same configuration is still employed in an electric vehicle using the in-wheel motors as a driving source.

### SUMMARY OF INVENTION

By using the in-wheel motors as the driving source, an space corresponding to an engine compartment of the engine vehicle is no longer required, and it is possible to arrange a driver seat towards the front side by a corresponding amount. Therefore, it is possible to increase a cabin space. However, if the driver seat is arranged towards the front side, a wheel housing is provided so as to form a projection located immediately adjacent to the driver's foot, and so, it is difficult to arrange the accelerator pedal and the brake pedal side by side.

The present invention has been conceived in light of the conventional problem. An object of the present invention is to provide a steering wheel that is suitable for a vehicle in which an accelerator pedal and a brake pedal cannot easily be arranged side by side, and a control device and a control method of the vehicle using the steering wheel.

The present invention provides the following solutions to solve the above-mentioned problems to be solved. In the following, although the reference signs used in the description are given for ease of understanding, there is no limitation thereto. In addition, the configuration described with the reference signs may be replaced or modified appropriately.

A first aspect according to the present invention is a steering wheel including: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L) and extends in vertical direction; a right grip bar part (13R) that is fixed to the right spoke part (12R) and extend in the vertical direction; and an accelerator grip lever (14L or 14R) that is provided: so as to extend in the vertical direction behind one grip bar part (13L or 13R) of the left grip bar part (13L) and the right grip bar part (13R) when viewed by a driver from a front; such that at least a part of accelerator grip lever (14L or 14R) is hidden by the one grip bar part (13L or 13R); and so as to be closer to the base part (11) than the one grip bar part (13L or 13R), the accelerator grip lever (14L or 14R) being configured to approach the one grip bar part (13L or 13R), when the driver adjusts driving force for the wheel, by undergoing a stroke in a direction moving away from the base part (11), when viewed in a top view of the steering wheel, about an upper end serving as a rotation center as the accelerator grip lever (14L or 14R) is operated by being held together with the one grip bar part (13L or 13R).

A second aspect according to the present invention is a steering wheel including: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L); a right grip bar part (13R) that is fixed to the right spoke part (12R); and an accelerator grip lever (14L or 14R) that is provided such that a base portion is provided on the base part (11) at a location further away from a driver seat than the left grip bar part (13L) and the right grip bar part (13R), the accelerator grip lever (14L or 14R) being configured such that, when a driver adjusts driving force for a wheel, as the driver closes a finger and pulls the accelerator grip lever (14L or 14R) towards the driver in a state holding a one grip bar part (13L or 13R) of the left grip bar part (13L) and the right grip bar part (13R), a contact area contacting with the finger of the driver is reduced, and the accelerator grip lever (14L or 14R) returns to a non-operated initial state by being detached from the finger tip of the driver as the driver further closes the finger beyond a full stroke position.

A third aspect according to the present invention is the steering wheel of the first or second aspect further including a left horn switch (15L) that is provided at a location where the driver can operate the left horn switch (15L) with thumb of a left hand in a state holding the left grip bar part (13L); and a right horn switch (15R) that is provided at a location where the driver can operate the right horn switch (15R) with thumb of a right hand in a state holding the right grip bar part (13R).

A fourth aspect according to the present invention is a steering wheel of of any one of the first to third aspects further including an accelerator grip lever (14R or 14L) that is arranged at a left-right symmetrical location about a center line of the steering wheel as an axis of symmetry with respect to the accelerator grip lever (14L or 14R) operated in a state holding the one grip bar part (13L or 13R), the accelerator grip lever (14L or 14R) being configured to be operated, when the driver adjusts the driving force for the wheel, in a state holding an other grip bar part (13R or 13L) of the left grip bar part (13L) and the right grip bar part (13R).

A fifth aspect according to the present invention is the invention using the fourth aspect and is a vehicle control device including: a one operation-amount detection unit (S100 or S200) configured to detect an operation amount of the accelerator grip lever (14L or 14R) that is operated in a state holding the one grip bar part (13L or 13R); an other operation-amount detection unit (S200 or S100) configured to detect the operation amount of the accelerator grip lever (14R or 14L) that is operated in a state holding the other grip bar part (13R or 13L); and a drive-mode setting unit (S300) configured to set a drive mode to a power drive mode if both of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100) are larger than a power-mode determination amount, and to set the drive mode to a normal drive mode if at least one of the operation amounts detected is smaller than the power-mode determination amount.

A sixth aspect according to the present invention is the invention using the fourth aspect and is a vehicle control device including: a one operation-amount detection unit (S100 or S200) configured to detect an operation amount of the accelerator grip lever (14L or 14R) that is operated in a state holding the one grip bar part (13L or 13R); an other operation-amount detection unit (S200 or S100) configured to detect the operation amount of the accelerator grip lever (14R or 14L) that is operated in a state holding the other grip bar part (13R or 13L); and a driving-force controlling unit (S400) configured to control the driving force for the wheel based on a larger operation amount of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100).

A seventh aspect according to the present invention is the invention using the fourth aspect and is a vehicle control device including: a one operation-amount detection unit (S100 or S200) configured to detect an operation amount of the accelerator grip lever (14L or 14R) that is operated in a state holding the one grip bar part (13L or 13R); an other operation-amount detection unit (S200 or S100) configured to detect the operation amount of the accelerator grip lever (14R or 14L) that is operated in a state holding the other grip bar part (13R or 13L); and a driving-force controlling unit (S400) configured to control the driving force of the wheel based on a total operation amount obtained by mutually adding products that are obtained by respectively multiplying a larger operation amount and a smaller operation amount of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100) by coefficients, which are in a mutual complementary relationship of unity.

An eighth aspect according to the present invention is the invention using the fourth aspect and is a control method of a vehicle including: a one operation-amount detection step (S100 or S200) of detecting the operation amount of the accelerator grip lever (14L or 14R) that is operated in a state holding the one grip bar part (13L or 13R); an other operation-amount detection step (S200 or S100) of detecting the operation amount of the accelerator grip lever (14R or 14L) that is operated in a state holding the other grip bar part (13R or 13L); and a drive-mode setting step (S300) of setting a drive mode to a power drive mode if both of the operation amount of the accelerator grip lever detected by the one operation-amount detection step (S100 or S200) and the operation amount of the accelerator grip lever detected by the other operation-amount detection step (S200 or S100) are larger than a power-mode determination amount, and setting the drive mode to a normal drive mode if at least one of the operation amounts detected is smaller than the power-mode determination amount.

A ninth aspect according to the present invention is the invention using the fourth aspect and is a control method of a vehicle including: a one operation-amount detection step (S100 or S200) of detecting the operation amount of the accelerator grip lever (14L or 14R) that is operated in a state holding the one grip bar part (13L or 13R); an other operation-amount detection step (S200 or S100) of detecting the operation amount of the accelerator grip lever (14R or 14L) that is operated in a state holding the other grip bar part (13R or 13L); and a driving-force controlling step (S400) of controlling the driving force for the wheel based on a larger operation amount the operation amount of the accelerator grip lever detected by the one operation-amount detection step (S100 or S200) and the operation amount of the accelerator grip lever detected by the other operation-amount detection step (S200 or S100).

A tenth aspect according to the present invention is the invention using the fourth aspect and is a control method of a vehicle including: a one operation-amount detection step (S100 or S200) of detecting the operation amount of the accelerator grip lever (14L or 14R) that is operated in a state holding the one grip bar part (13L or 13R); an other operation-amount detection step (S200 or S100) of detecting the operation amount of the accelerator grip lever (14R or 14L) that is operated in a state holding the other grip bar part (13R or 13L); and a driving-force controlling step (S400) of controlling the driving force for the wheel based on a total operation amount obtained by mutually adding products that are obtained by respectively multiplying a larger operation amount and a smaller operation amount of the operation amount of the accelerator grip lever (14L or 14R) detected by the one operation-amount detection step (S100 or S200) and the operation amount of the accelerator grip lever (14R or 14L) detected by the other operation-amount detection step (S200 or S100) by coefficients, which are in a mutual complementary relationship of unity.

An eleventh aspect according to the present invention is a control device for a vehicle using a steering wheel including: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L); a right grip bar part (13R) that is fixed to the right spoke part (12R); an accelerator grip lever (14L or 14R) configured to be operated, when a driver adjusts driving force for the wheel, in a state holding a one grip bar part (13L or 13R) of the left grip bar part (13L) and the right grip bar part (13R); and an accelerator grip lever (14R or 14L) configured to be operated, when the driver adjusts the driving force for the wheel, in a state holding an other grip bar part (13R or 13L) of the left grip bar part (13L) and the right grip bar part (13R), wherein the vehicle control device includes: a one operation-amount detection unit (S100 or S200) configured to detect an operation amount of the accelerator grip lever (14L or 14R) that is operated in a state holding the one grip bar part (13L or 13R); an other operation-amount detection unit (S200 or S100) configured to detect the operation amount of the accelerator grip lever (14R or 14L) that is operated in a state holding the other grip bar part (13R or 13L); and a drive-mode setting unit (S300) configured to set a drive mode to a power drive mode in which the driving torque is maximized if both of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100) are larger than a power-mode determination amount, and configured to set, if at least one of the operation amounts detected is smaller than the power-mode determination amount, the drive mode to a normal drive mode in which the driving torque is set to be proportional to a larger operation amount of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100).

A twelfth aspect according to the present invention is a control device of a vehicle using a steering wheel provided with: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L); a right grip bar part (13R) that is fixed to the right spoke part (12R); an accelerator grip lever (14L or 14R) configured to be operated, when a driver adjusts driving force for the wheel, in a state holding a one grip bar part (13L or 13R) of the left grip bar part (13L) and the right grip bar part (13R); and an accelerator grip lever (14R or 14L) configured to be operated, when the driver adjusts the driving force for the wheel, in a state holding an other grip bar part (13R or 13L) of the left grip bar part (13L) and the right grip bar part (13R), wherein the vehicle control device comprises: a one operation-amount detection unit (S100 or S200) configured to detect an operation amount of the accelerator grip lever (14L or 14R) that is operated in a state holding the one grip bar part (13L or 13R); an other operation-amount detection unit (S200 or S100) configured to detect the operation amount of the accelerator grip lever (14R or 14L) that is operated in a state holding the other grip bar part (13R or 13L); and a driving-force controlling unit (S400) configured to control the driving force for the wheel based on a total operation amount that is obtained by: obtaining a product by multiplying a larger operation amount of the operation amount of the accelerator grip lever (14L or 14R) detected by the one operation-amount detection unit (S100 or S200) and the operation amount of the accelerator grip lever (14R or 14L) detected by the other operation-amount detection unit (S200 or S100) by a first coefficient, which has been given in advance as a constant value; obtaining a product by multiplying a smaller operation amount by a second coefficient, which is smaller than and is in a complementary relationship of unity with the first coefficient; and adding both products.

A thirteenth aspect according to the present invention is a control method of a vehicle using a steering wheel provided with: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L); a right grip bar part (13R) that is fixed to the right spoke part (12R); an accelerator grip lever (14L or 14R) configured to be operated, when a driver adjusts driving force for the wheel, in a state holding a one grip bar part (13L or 13R) of the left grip bar part (13L) and the right grip bar part (13R); and an accelerator grip lever (14R or 14L) configured to be operated, when the driver adjusts the driving force for the wheel, in a state holding an other grip bar part (13R or 13L) of the left grip bar part (13L) and the right grip bar part (13R), wherein the vehicle control device comprises: a one operation-amount detection step (S100 or S200) of detecting the operation amount of the accelerator grip lever (14L or 14R) that is operated in a state holding the one grip bar part (13L or 13R); an other operation-amount detection step (S200 or S100) of detecting the operation amount of the accelerator grip lever (14R or 14L) that is operated in a state holding the other grip bar part (13R or 13L); and a drive-mode setting step (S300) of setting a drive mode to a power drive mode in which the driving torque is maximized if both of the operation amount of the accelerator grip lever (14L or 14R) detected by the one operation-amount detection step (S100 or S200) and the operation amount of the accelerator grip lever (14R or 14L) detected by the other operation-amount detection step (S200 or S100) are larger than a power-mode determination amount, and setting, if at least one of the operation amounts detected is smaller than the power-mode determination amount, the drive mode to a normal drive mode in which the driving torque is set to be proportional to a larger operation amount of the operation amount of the accelerator grip lever (14L or 14R) detected by the one operation-amount detection step (S100 or S200) and the operation amount of the accelerator grip lever (14R or 14L) detected by the other operation-amount detection step (S200 or S100).

A fourteenth aspect according to the present invention is a control method of a vehicle using a steering wheel provided with: a base part (11) that is connected to a steering shaft for adjusting steering angle of a wheel; a left spoke part (12L) that is fixed to the base part (11) and extends in left direction; a right spoke part (12R) that is fixed to the base part (11) and extends in right direction; a left grip bar part (13L) that is fixed to the left spoke part (12L); a right grip bar part (13R) that is fixed to the right spoke part (12R); an accelerator grip lever (14L or 14R) configured to be operated, when a driver adjusts driving force for the wheel, in a state holding a one grip bar part (13L or 13R) of the left grip bar part (13L) and the right grip bar part (13R); and an accelerator grip lever (14R or 14L) configured to be operated, when the driver adjusts the driving force for the wheel, in a state holding an other grip bar part (13R or 13L) of the left grip bar part (13L) and the right grip bar part (13R), wherein the vehicle control method includes: a one operation-amount detection step (S100 or S200) of detecting the operation amount of the accelerator grip lever (14L or 14R) that is operated in a state holding the one grip bar part (13L or 13R); an other operation-amount detection step (S200 or S100) of detecting the operation amount of the accelerator grip lever (14R or 14L) that is operated in a state holding the other grip bar part (13R or 13L); and a driving-force controlling step (S400) of controlling the driving force for the wheel based on a total operation amount that is obtained by: obtaining a product by multiplying a larger operation amount of the operation amount of the accelerator grip lever (14L or 14R) detected by the one operation-amount detection step (S100 or S200) and the operation amount of the accelerator grip lever (14R or 14L) detected by the other operation-amount detection step (S200 or S100) by a first coefficient, which has been given in advance as a constant value; obtaining a product by multiplying a smaller operation amount by a second coefficient, which is smaller than and is in a complementary relationship of unity with the first coefficient; and adding both products.

### BRIEF DESCRIPTION OF DRAWINGS

[FIGs. 1A and 1B] FIGs. 1A and 1B are diagrams showing a first embodiment of a steering wheel according to the present invention.
[FIG. 2] FIG. 2 is a diagram for explaining the operational advantages of the steering wheel.
[FIG. 3] FIG. 3 is a diagram for explaining the operational advantages of the steering wheel.
[FIG. 4] FIG. 4 is a main flowchart for explaining the detail of the first embodiment of control executed by a controller for controlling driving force (motor output) for a wheels after receiving an operation signal from an accelerator grip lever 14.
[FIG. 5] FIG. 5 is a flowchart for explaining drive-mode setting processing.
[FIG. 6] FIG. 6 is a flowchart for explaining driving-force controlling processing.
[FIG. 7] FIG. 7 is a diagram showing an example of a control map stored in the controller.
[FIG. 8] FIG. 8 is a main flowchart for explaining the detail of the second embodiment of the control executed by the controller for controlling the driving force (motor output) for the wheels after receiving the operation signal from the accelerator grip lever 14.
[FIG. 9] FIG. 9 is a flowchart for explaining the driving-force controlling processing in the second embodiment.
[FIGs. 10A - 10C] FIGs. 10A - 10C are diagrams for explaining the change in the driving torque when the second embodiment is performed.
[FIGs. 11A - 11D] FIGs. 11A - 11D are diagrams showing the second embodiment of the steering wheel according to the present invention.
[FIG. 12] FIG. 12 is a XII-XII sectional view of FIG. 11B.

### DESCRIPTION OF EMBODIMENTS

An embodiment of the present invention will be described below with reference to the attached drawings.

### (A configuration of a first embodiment of a steering wheel)

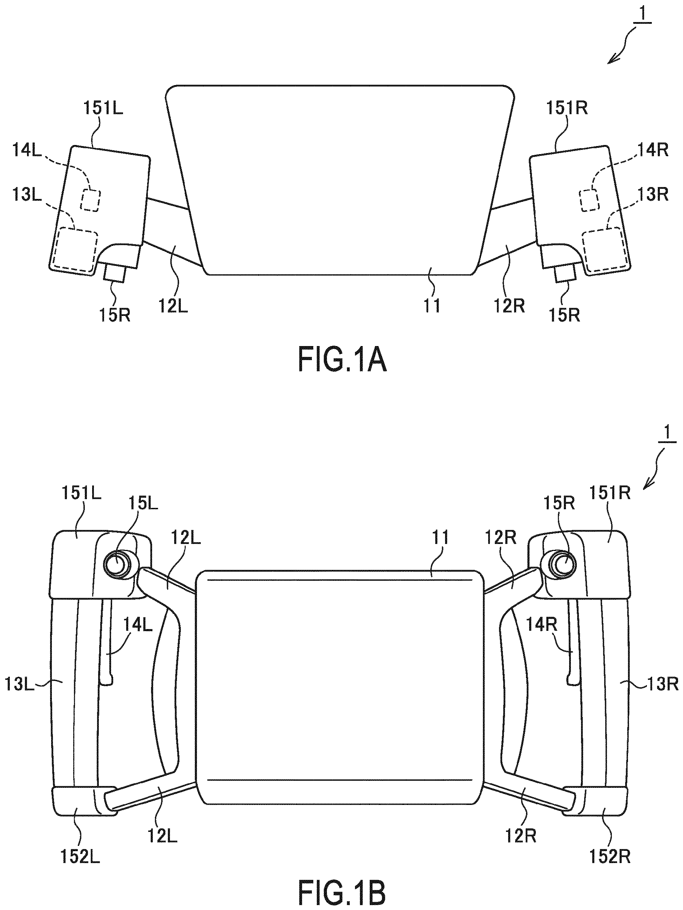

FIGs. 1A and 1B are diagrams showing the first embodiment of the steering wheel according to the present invention, and FIG. 1A is a top view and FIG. 1B is a front view.

First of all, for ease of understanding of this embodiment, a description will be given of a concept of the invention forming the base thereof.

As described above, the inventors are currently developing an ultra-compact electric vehicle. With such an electric vehicle, a vehicle weight is light, and a lock-to-lock rotation angle of a steering wheel is small. With a normal vehicle, although it may differ depending on a specification, the lock-to-lock rotation angle is that corresponds to three full revolutions (540 degrees towards the left and right directions from the neutral position) etc. Therefore, the steering wheel has an annular shape (a wheel shape) such that a driver can change holding positions in the course of rotating the steering wheel. However, with the vehicle, which is being developed by the inventors, the lock-to-lock rotation angle is very small, about 2/3 revolution (120 degrees towards the left and right directions from the neutral position), and therefore, the driver does not need to change the holding positions when operating the steering wheel. The steering wheel is of a type in which the holding positions are always the same.

Accordingly, the inventors have developed a steering wheel 1 for the ultra-compact electric vehicle of a type that has grip bar parts 13 provided via spoke parts 12 that are fixed to a base part 11 and extend in the left and right directions.

In addition, if a driver seat is arranged towards the front side as much as possible, a wheel housing is provided so as to form a projection located immediately adjacent to the driver's foot, and so, it is difficult to arrange an accelerator pedal and a brake pedal side by side. Because the steering wheel developed by the inventors is of the type in which the holding positions are always the same, the inventors have come up with an idea of providing an accelerator grip lever 14 for performing an accelerating operation at a position that allows operation thereof in a state holding the grip bar part 13. Especially, in the first embodiment, the inventors have come up with an idea of providing the accelerator grip lever 14 for performing the accelerating operation at a position behind this gripping position (the grip bar part 13) (i.e. the position where at least a part of the accelerator grip lever 14 is hidden by the grip bar part 13 when viewed from the front side). By providing the accelerator grip lever 14 at such a position, it is possible to operate the accelerator grip lever 14 with finger tip(s) while holding the grip.

For the invention made on the basis of the above-mentioned concept, a specific detail will be explained below with reference to the drawings.

As shown in FIG. 1B, the steering wheel 1 is provided with the base part 11, left spoke parts 12L, right spoke parts 12R, a left grip bar part 13L, a right grip bar part 13R, a left accelerator grip lever 14L, and a right accelerator grip lever 14R. In this description, when there is no need to specifically distinguish the left side and the right side, the left spoke parts 12L and the right spoke parts 12R are collectively referred to as the spoke part 12. Similarly, the left grip bar part 13L and the right grip bar part 13R are collectively referred to as the grip bar part 13. The left accelerator grip lever 14L and the right accelerator grip lever 14R are collectively referred to as the accelerator grip lever 14.

The base part 11 is a part connected to a steering shaft for adjusting the steering angle of wheels. Although the base part 11 is illustrated as having a rectangular shape in this embodiment, the shape of the base part 11 is not limited to such a shape. Any shape can be appropriately employed.

The left spoke parts 12L are fixed to the base part 11 and extend in the left direction. In this embodiment, the left spoke parts 12L are formed of two parts, an upper-side left spoke part and a lower-side left spoke part, forming a pair. The upper-side and lower-side left spoke parts 12L are each connected to both ends of the left grip bar part 13L. However, if a sufficient strength can be ensured, there may only be the upper-side left spoke part 12L or the lower-side left spoke part 12L. Because the right spoke parts 12R also have the configuration similar to that of the left spoke parts 12L, the detailed description thereof shall be omitted.

The left grip bar part 13L extends in the vertical direction and is fixed to the left spoke parts 12L. Especially in this embodiment, as described above, the left spoke parts 12L are formed of two parts, the upper-side left spoke part and the lower-side left spoke part, forming a pair, and the left grip bar part 13L is fixed to each of the upper-side and lower-side left spoke parts 12L. It is preferable that emboss processing be applied or leather etc. be applied to the surface of the left grip bar part 13L such that the hand of the driver holding the left grip bar part 13L does not slip easily. Because the right grip bar part 13R also has the configuration similar to that of the left grip bar part 13L, the detailed description thereof shall be omitted.

The left accelerator grip lever 14L is a lever that is operated with the index finger and/or the middle finger of the left hand of the driver in a state holding the left grip bar part 13L with the left hand when the driver adjusts the driving force (motor output) for the wheels. Similarly to the left grip bar part 13L, the left accelerator grip lever 14L extends in the vertical direction. The left accelerator grip lever 14L is arranged so as to be substantially parallel to the left grip bar part 13L. As shown in FIG. 1B, the left accelerator grip lever 14L is provided at the position where at least a part of the left accelerator grip lever 14L is hidden by the left grip bar part 13L when viewed from the front side. In addition, as shown in FIG. 1A, the left accelerator grip lever 14L is arranged so as to be closer to the base part 11 than the left grip bar part 13L. When the driver operates the left accelerator grip lever 14L, the left accelerator grip lever 14L undergoes a stroke so as to approach the left grip bar part 13L by being rotated about the upper end thereof serving as the rotation center. The left accelerator grip lever 14L undergoes the stroke in the lower-left direction at an angle in FIG. 1A from an initial position shown by the broken line in FIG. 1A so as to approach the left grip bar part 13L. When the driver reduces the operating force applied to the left accelerator grip lever 14L, the left accelerator grip lever 14L moves in the direction towards the initial position by a spring force. As the driver releases the finger tip(s) from the accelerator grip lever 14, the accelerator grip lever 14 returns to the initial position by the spring force. Because the steering wheel is configured as described above, when the driver operates the left accelerator grip lever 14L in a state holding the steering wheel 1(the left grip bar part 13L and the right grip bar part 13R) with his/her armpits open, the stroke direction of the finger of the left hand matches the stroke direction of the left accelerator grip lever 14L, and so, the driver can perform the operation without feeling the uncomfortable feeling. Because the right accelerator grip lever 14R also has the configuration similar to that of the left accelerator grip lever 14L, the detailed description thereof shall be omitted.

An upper cover 151L and a lower cover 152L are respectively provided at positions where the left grip bar part 13L is fixed to the left spoke parts 12L. A left horn switch 15L is provided on the right-side portion of the upper cover 151L when viewed from the front side. However, the left horn switch 15L may be arranged at any locations as long as the driver can operate the left horn switch 15L with the thumb of the left hand in a state holding the left grip bar part 13L. For example, the left horn switch 15L may be provided at a portion of the upper cover 151L located above the left grip bar part 13L. The left horn switch 15L may also be arranged by making a hole in the left grip bar part 13L and by providing the left horn switch 15L in the hole. An upper cover 151R and a lower cover 152R are respectively provided at positions where the right grip bar part 13R is fixed to the right spoke parts 12R, and because the configurations thereof are similar to those of the upper cover 151L and the lower cover 152L, the detailed description thereof shall be omitted.

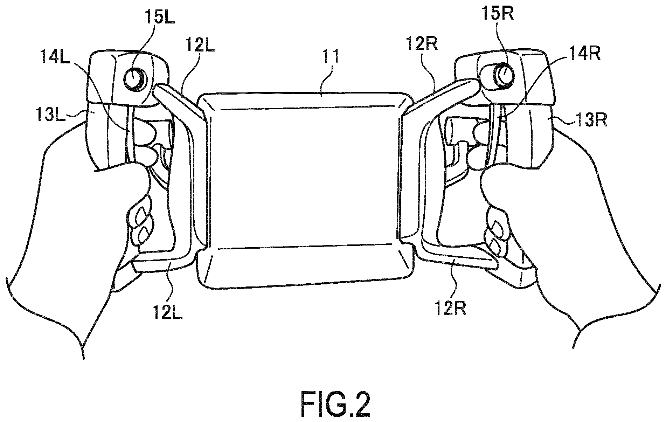

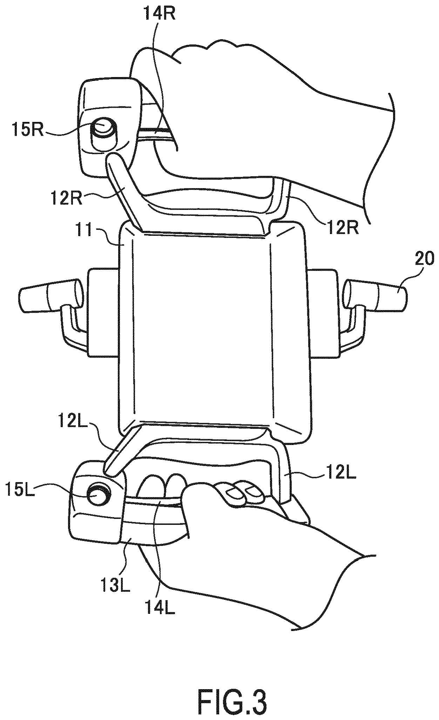

FIGs. 2 and 3 are diagrams for explaining the operational advantages of the steering wheel. Although these figures show a situation in which the driver is operating the steering wheel in a state sitting on the driver seat, the steering wheel is shown by being viewed slightly from the left side of the positions of the driver's eyes. Therefore the figures are not in a left-right symmetry.

In the steering wheel 1 explained in the embodiment, the grip bar part 13 is provided via the spoke parts 12 that are fixed to the base part 11 and extend in the left and right directions. With such a configuration, it is easy for the driver to hold the steering wheel 1 with his/her armpits open.

The accelerator grip lever 14 for performing the accelerating operation is provided at the position behind the grip bar part 13 (the position where at least a part of the accelerator grip lever 14 is hidden by the grip bar part 13 when viewed from the front side). With such a configuration, as shown in FIG. 2, it is easy for the driver to operate the accelerator grip lever 14 with the index finger and/or the middle finger in a state holding the grip bar part 13.

In addition, the accelerator grip lever 14 is configured so as to be arranged closer to the base part 11 than the grip bar part 13 and so as to undergoes the stroke backwards at an angle when operated by the driver. Therefore, when the driver operates the accelerator grip lever 14 in a state holding the steering wheel 1(the left grip bar part 13L and the right grip bar part 13R) with his/her armpits open, the stroke direction of the finger matches the stroke direction of the accelerator grip lever 14, and the driver can perform the operation without feeling the uncomfortable feeling.

Furthermore, because the accelerator grip lever 14 is arranged so as to be closer to the base part 11 than the grip bar part 13, the operational advantage is also afforded in that, the accelerator grip lever 14 is easily operated even when the steering wheel 1 is rotated. In other words, as shown in FIG. 3, as the grip bar part 13 approaches the top position when the driver rotates the steering wheel 1, the back of the hand gradually faces the driver. Because the steering wheel 1 is connected to the steering shaft that is inclined at an angle of a few tens degrees with respect to the horizontal direction, as the driver rotates the steering wheel 1, for example, as the steering wheel 1 is rotated anticlockwise as shown in FIG. 3, the left hand moves towards the driver and the right hand moves away from the driver, and the back of the right hand approaching the top position gradually faces the driver and shifts towards the thumb. In this embodiment, because the accelerator grip lever 14 is arranged so as to be closer to the base part 11 than the grip bar part 13 (in other words, the accelerator grip lever 14 is arranged close to the thumb holding the grip bar part 13), as the right hand is shifted towards the thumb side, the finger(s) operating the accelerator grip lever 14, the index finger and/or the middle finger, can be naturally shifted to the thumb, and so, the accelerator grip lever 14 can be operated easily even when the steering wheel 1 is being rotated.

In addition, by arranging both the left accelerator grip lever 14L and the right accelerator grip lever 14R, even when a case in which the hand currently holding the accelerator grip lever needs to be changed in order to operate a combination switch 20 etc. for turning on/off wipers or turn signals, it is possible to operate the switch while keeping the current vehicle speed.

Furthermore, because a horn switch 15 is provided at a position where the driver can operate it with the thumb in a state holding the grip bar part 13, it is possible to sound the horn while operating the accelerator grip lever 14.

### (The first embodiment of control of the vehicle using the steering wheel)

Next, control of the vehicle using the above-mentioned steering wheel 1 will be described with reference to control flowcharts.

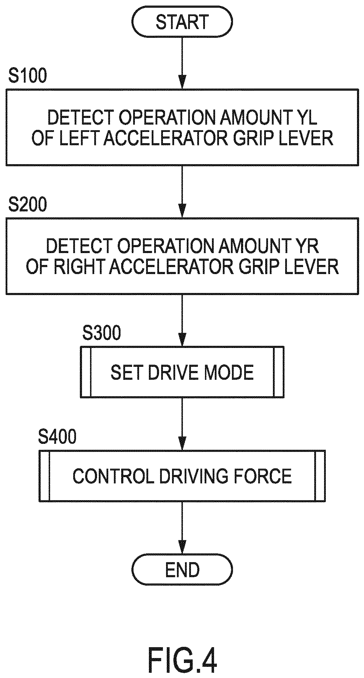

FIG. 4 is a main flowchart for explaining the detail of the first embodiment of the control executed by a controller for controlling the driving force (motor output) for the wheels after receiving an operation signal from the accelerator grip lever 14. This control is executed repeatedly at a predetermined time cycle.

In step S100, the controller detects an operation amount (stroke amount) YL [%] on the basis of output voltage XL [V] from an accelerator sensor connected to the left accelerator grip lever 14L.

In step S200, the controller detects an operation amount (stroke amount) YR [%] on the basis of output voltage XR [V] from the accelerator sensor connected to the right accelerator grip lever 14R.

In step S300, the controller executes a drive-mode setting processing. Specific details of the control will be described later.

In step S400, the controller executes a driving-force controlling processing. Specific details of the control will be described later.

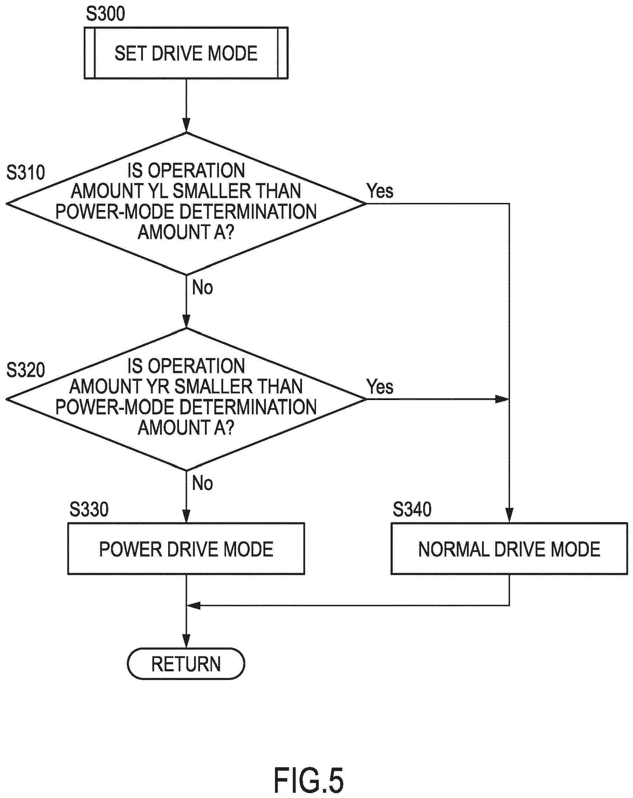

FIG. 5 is a flowchart for explaining the drive-mode setting processing.

In step S310, the controller determines whether or not the operation amount YL is smaller than power-mode determination amount A. Detail of the power-mode determination amount A will be described later. In the controller, if the determination result is negative, the process proceeds to step S320, and if the determination result is positive, the process proceeds to step S340.

In step S320, the controller determines whether or not the operation amount YR is smaller than the power-mode determination amount A. In the controller, if the determination result is negative, the process proceeds to step S330, and if the determination result is positive, the process proceeds to step S340.

In step S330, the controller sets a drive mode to a power drive mode.

In step S340, the controller sets the drive mode to a normal drive mode.

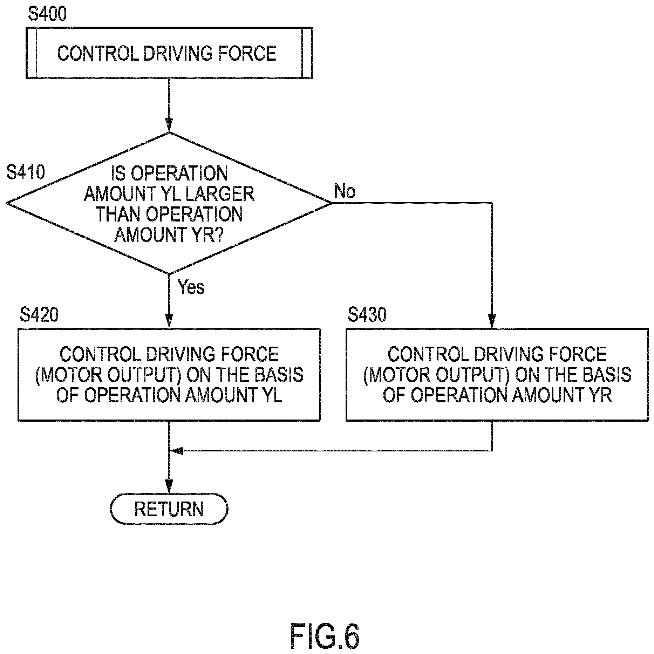

FIG. 6 is a flowchart for explaining the driving-force controlling processing.

In step S410, the controller determines whether or not the operation amount YL is larger than the operation amount YR. In the controller, if the determination result is positive, the process proceeds to step S420, and if the determination result is negative, the process proceeds to step S430.

In step S420, the controller controls the driving force (motor output) on the basis of the operation amount YL.

In step S430, the controller controls the driving force (motor output) on the basis of the operation amount YR.

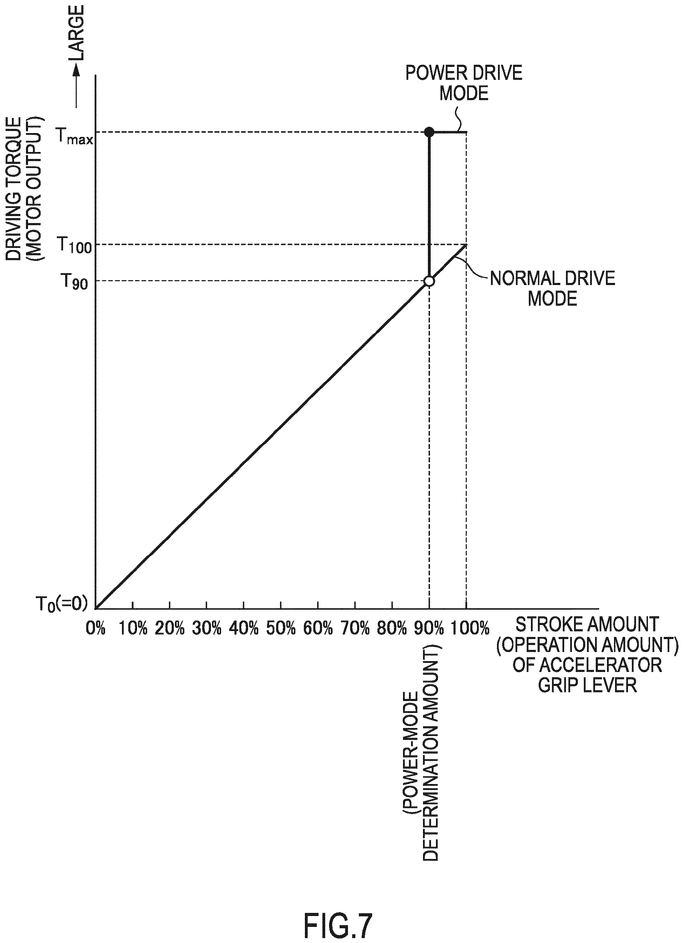

Next, the power-mode determination amount A and the drive mode will be described with reference to FIG. 7. FIG. 7 is a diagram showing an example of a control map stored in the controller.

The horizontal axis in FIG. 7 shows the stroke amount (operation amount) of the accelerator grip lever 14. A state in which the driver is not holding the accelerator grip lever 14 at all is indicated as 0% and a state in which the driver is holding the accelerator grip lever 14 at full stroke is indicated as 100%. The vertical axis in FIG. 7 shows the driving torque (motor output), and the value is larger towards the top along the axis. In FIG. 7, the power-mode determination amount is set at a value 90% of the operation amount of the accelerator grip lever 14.

Normally, the driving torque (motor output) is increased in proportion to the stroke amount (operation amount) of the accelerator grip lever 14. When the stroke amounts (operation amounts) of both of the left accelerator grip lever 14L and the right accelerator grip lever 14R exceed 90%, that is the power-mode determination amount, the driving torque (motor output) is increased rapidly.

Next, the change in the driving torque will be described in correspondence with the above-mentioned flowchart.

When both of the operation amount YL of the left accelerator grip lever 14L and the operation amount YR of the right accelerator grip lever 14R are smaller than the power-mode determination amount, the controller repeats a process sequence, S100 -> S200 -> S300 -> S310 (-> S320) -> S340 -> S410 -> S420 (or S430), and controls the driving force (motor output) on the basis of the larger operation amount of the operation amount YL or the operation amount YR. In this case, the driving force (motor output) is changed between T0 and T90 in FIG. 7.

In a state in which the one of the operation amount YL of the left accelerator grip lever 14L and the operation amount YR of the right accelerator grip lever 14R is smaller than the power-mode determination amount and the other is larger than the power-mode determination amount (this state corresponds to, for example, a state in which the accelerator grip lever 14 is operated only by one hand), the controller repeats a process sequence, S100 -> S200 -> S300 -> S310 (-> S320) -> S340 -> S410 -> S420 (or S430), and controls the driving force (motor output) on the basis of the larger operation amount of the operation amount YL or the operation amount YR. In this case, the driving force (motor output) is changed between T90 and T100 in FIG. 7.

In a state in which both of the operation amount YL of the left accelerator grip lever 14L and the operation amount YR of the right accelerator grip lever 14R are larger than the power-mode determination amount, the controller a process sequence, S100 -> S200 -> S300 -> S310 -> S320 -> S330 -> S410 -> S420 (or S430), and controls the driving force (motor output). In this case, the driving force (motor output) becomes Tmax in FIG. 7.

According to this embodiment, the driving force (motor output) is controlled on the basis of the larger operation amount of the operation amount YL of the left accelerator grip lever 14L or the operation amount YR of the right accelerator grip lever 14R. By performing such a control, for example, in a normal driving, the driving force can be controlled only by holding the accelerator grip lever with one hand. In addition, there may be a situation in which the hand currently holding the accelerator grip lever needs to be changed when the combination switch etc. is operated. In such a situation, it is possible to operate the switch while keeping the vehicle speed by holding the accelerator grip lever with another hand by a holding amount similar to that of the hand currently holding the accelerator grip lever.

In addition, large driving force can be achieved with a large stroke of the left accelerator grip lever 14L and the right accelerator grip lever 14R, and so, it is convenient when a large acceleration is required for overtaking another vehicle, for example.

### (A second embodiment of control of the vehicle using the steering wheel)

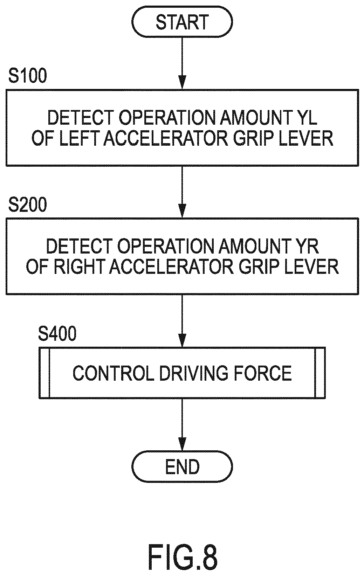

FIG. 8 is a main flowchart for explaining the detail of the second embodiment of the control executed by the controller for controlling the driving force (motor output) for the wheels after receiving the operation signal from the accelerator grip lever 14. This control is executed repeatedly at a predetermined time cycle.

In step S100, the controller detects the operation amount YL [%] on the basis of the output voltage XL [V] from the accelerator sensor connected to the left accelerator grip lever 14L.

In step S200, the controller detects the operation amount YR [%] on the basis of the output voltage XR [V] from the accelerator sensor connected to the right accelerator grip lever 14R.

In step S400, the controller executes the driving-force controlling processing. Specific details of the control will be described later.

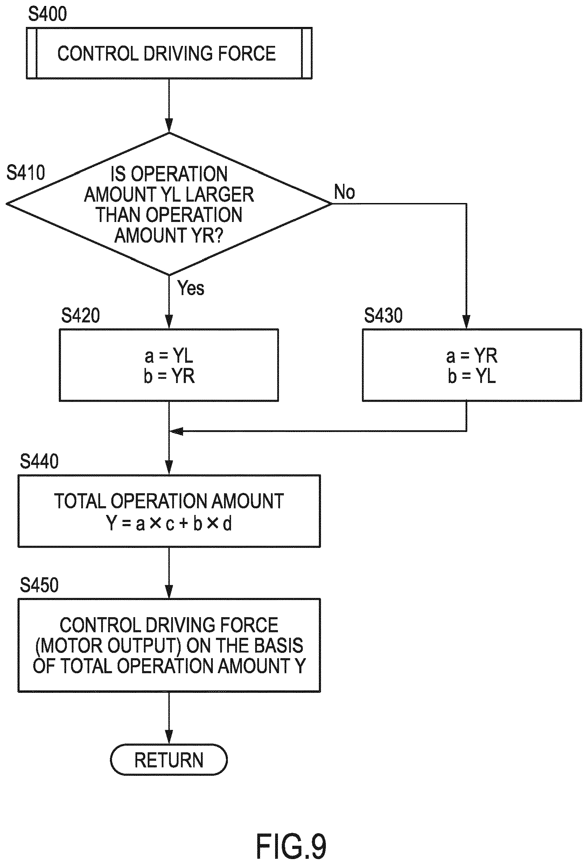

FIG. 9 is a flowchart for explaining the driving-force controlling processing of the second embodiment.

In step S410, the controller determines whether or not the operation amount YL is larger than the operation amount YR. In the controller, if the determination result is positive, the process proceeds to step S420, and if the determination result is negative, the process proceeds to step S430.

In step S420, a = YL/b = YR are set by the controller.

In step S430, a = YR/b = YL are set by the controller.

In step S440, the controller obtains a total operation amount Y. Specifically, the total operation amount Y is obtained by multiplying a larger operation amount a by coefficient c and multiplying a smaller operation amount b by coefficient d, and by mutually adding up the both products. In other words, the total operation amount Y = a × c + b × d. The coefficient c and coefficient d are given in advance, and for example, c = 0.8/d = 0.2. However, these values can be adjusted arbitrarily, and c = 0.7/d = 0.3 may be possible. As described above, it is preferable that the coefficient c and the coefficient d be set such that the sum of the both coefficient becomes 1 (unity), in other words, it is preferable that they be set so as to be in a mutual complementary relationship of unity.

In step S450, the controller controls the driving force (motor output) on the basis of the total operation amount Y.

Next, the change in the driving torque will be described in correspondence with the above-mentioned flowchart.

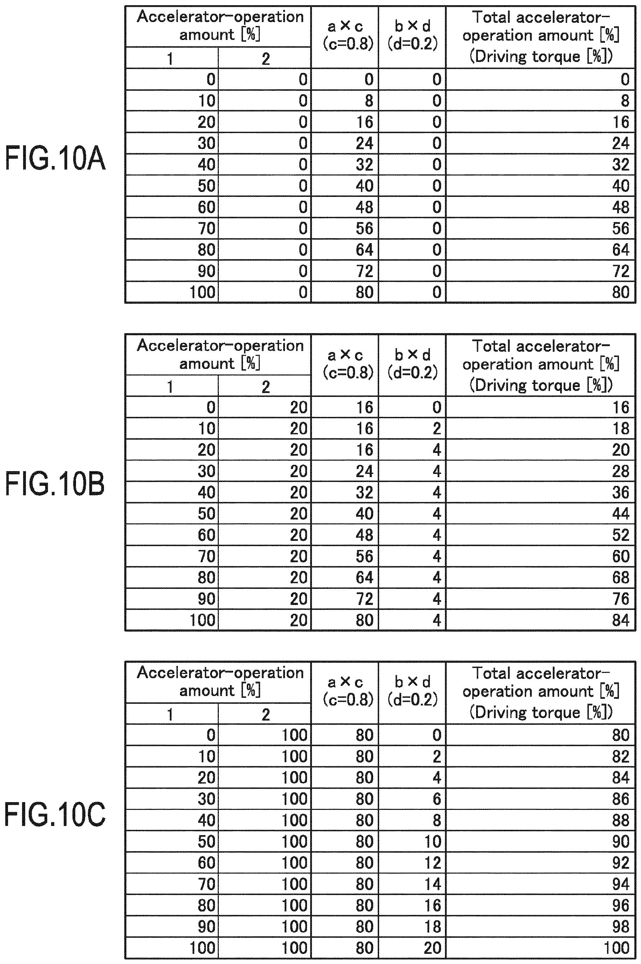

In a state in which one of the left accelerator grip lever 14L and the right accelerator grip lever 14R is in a free state (operation amount 0%), and only the other thereof is operated from the free state (operation amount 0%) to a full stroke (operation amount 100%), as described in FIG. 10A, the total operation amount calculated in S440 by the controller is changed from 0% to 80%, and the driving torque (motor output) is changed from 0% to 80% in proportion thereto. As described above, when only the accelerator grip lever on one side is operated, the drive mode is set to an eco- drive mode in which the torque is output up to 80% of the maximum torque.

When one of the left accelerator grip lever 14L and the right accelerator grip lever 14R is held rightly (operation amount 20%) and the other is operated at the same time, as described in FIG. 10B, the total operation amount calculated in S440 by the controller is changed from 16% to 84% (larger change than that in the case of FIG. 10A). In other words, because the one of the left accelerator grip lever 14L and the right accelerator grip lever 14R is held rightly, when the other accelerator grip lever is operated from the free state (operation amount 0%) to the full stroke (operation amount 100%), similarly to the case in FIG. 10A, larger driving torque is output.

When one of the left accelerator grip lever 14L and the right accelerator grip lever 14R is in a full stroke state (operation amount 100%) and the other is operated at the same time, as described in FIG. 10C, the total operation amount calculated in S440 by the controller is changed to 100%.

By performing the control in accordance with the second embodiment, even if one of the accelerator grip levers is operated during the other of the accelerator grip levers is being operated, it is possible to change the output torque smoothly.

### (A second embodiment of the steering wheel)

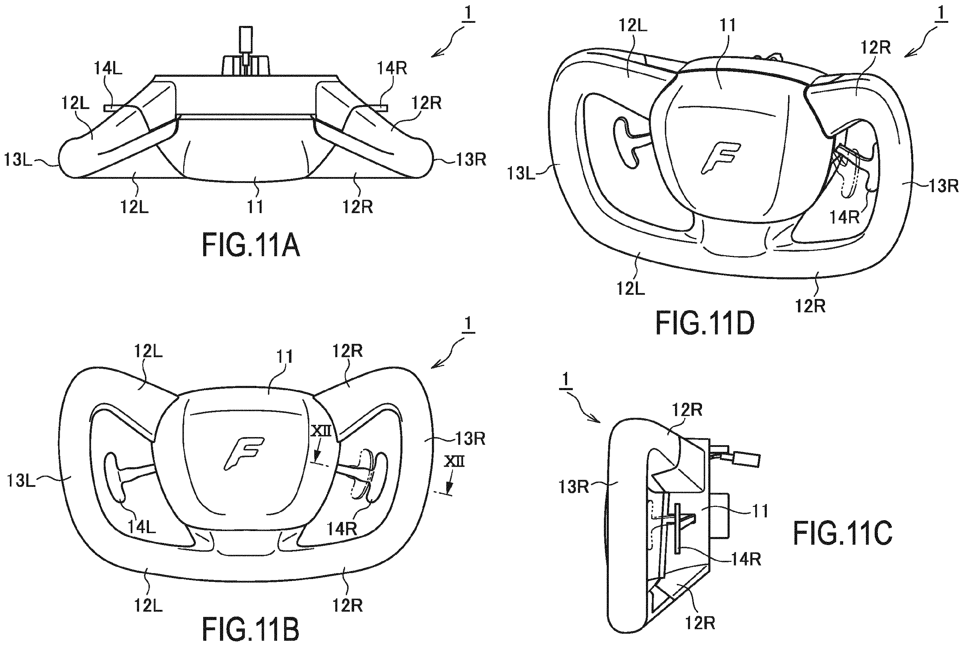

FIGs. 11A - 11D are diagrams showing the second embodiment of the steering wheel according to the present invention, and FIG. 11A is a top view, FIG. 11B is a front view, FIG. 11C is a right-side view, and FIG. 11D is a perspective view. Elements having the similar function with those in the first embodiment are given the same reference signs, and any duplicating description thereof is omitted appropriately.

In this second embodiment, base portions of the accelerator grip levers 14 (the left accelerator grip lever 14L and the right accelerator grip lever 14R) are provided so as to be located at the base part 11 and so as to extend in the left and right directions, respectively. By providing the accelerator grip levers 14 in this manner, it is also possible to operate the accelerator grip levers 14 with finger tip(s) in a state holding the grip bar parts 13.

In the first embodiment, both of the upper-side spoke parts 12 and the lower-side spoke parts 12 are formed so as to be fixed to the side parts of the base part 11 and extend in the left and right directions. In contrast, in this second embodiment, the lower-side spoke parts 12 are fixed to the base part 11 so as to extend in the left and right directions below the base part 11. The design of the configuration may be arbitrarily changed as in this manner.

The driver operates the accelerator grip lever 14 with the finger tip(s) while holding the grip bar part 13 such that the accelerator grip lever 14 moves towards the driver from the initial position shown by the solid line to the position shown by the one-dot chain line in FIG. 11. When the driver reduces the force operating the accelerator grip lever 14, the accelerator grip lever 14 moves in the direction towards the initial position by the spring force. As the driver releases the finger tip(s) from the accelerator grip lever 14, the accelerator grip lever 14 returns to the initial position by the spring force.

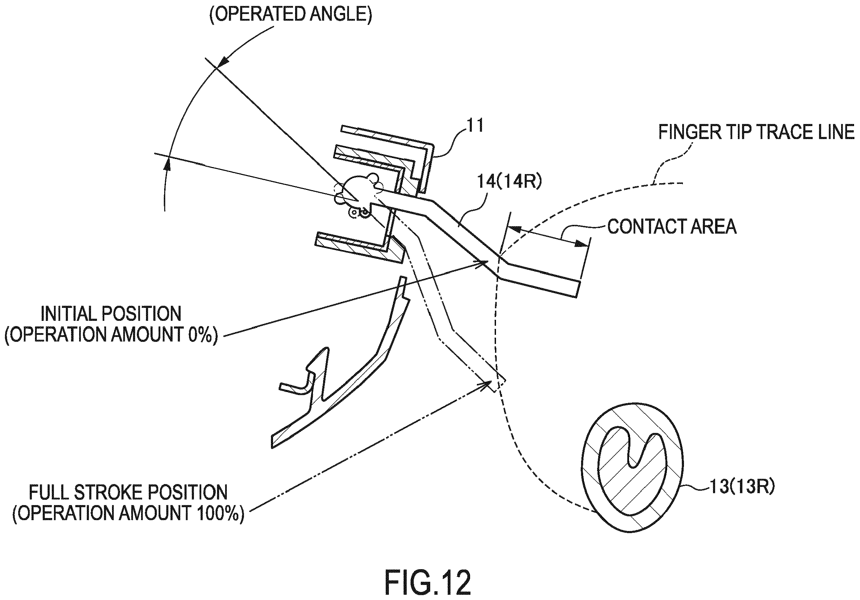

FIG. 12 is a XII-XII sectional view of FIG. 11B.

In a state in which no force is applied by the driver, the accelerator grip lever 14 is positioned at the initial position by the spring force. At this time, the operation amount is 0%.

As the driver pulls the accelerator grip lever 14 towards the driver by closing fingers (by closing hand) while holding the grip bar part 13, the finger tips of the driver move along a trace line shown by the broken line. At this time, as the accelerator grip lever 14 moves from the initial position, the contact area contacting with the fingers of the driver is reduced. As the driver further closes the fingers beyond a full stroke position (operation amount 100%), the accelerator grip lever 14 is detached away from the finger tips of the driver and returns to the initial position by the spring force.

Sensors for detecting the operation amount of the accelerator grip lever 14 are provided at the front and rear sides of the accelerator grip lever 14. In other words, two sensor are provided for each accelerator grip lever 14. A first sensor of the two sensors has a characteristic in which output voltage is increased as the accelerator grip lever 14 moves away from the initial position in a proportional manner. A second sensor of the two sensors has a characteristic in which the output voltage is decreased as the accelerator grip lever 14 moves away from the initial position in a proportional manner. By duplicate the system output by using two sensors for each accelerator grip lever 14 as described above, it is possible to improve the reliability. The same applies to the first embodiment.

According to this embodiment, as the driver further closes the fingers beyond the full stroke position (operation amount 100%), the accelerator grip lever 14 is detached away from the finger tips of the driver and returns to the initial position by the spring force. Therefore, even in a situation in which tension is applied to the hand and the hand is clenched firmly due to some reasons during driving, the accelerator grip lever 14 is detached away from the finger tips of the driver and returns to the initial position by the spring force, and thereby, it is possible to ensure high safety.

Although the embodiment of the present invention has been described above, the above-mentioned embodiment is merely an illustration of a part of an application example of the present invention, and there is no intention to limit the technical scope of the present invention to the specific configuration of the above-mentioned embodiment.

For example, in the above description, the configuration in which the accelerator grip levers 14 are provided at both left and right sides has been described with the illustrations thereof; however, the accelerator grip lever 14 may be provided only on one side. In this case, although it is not possible to establish the power drive mode by holding the left or right accelerator grip lever, the vehicle can be driven in the normal drive mode. Also in this case, no lever may be provided on the other side, or a brake lever, a gearshift lever, a drive mode switching lever, or the like may be provided.

In addition, the wave shape of the control map shown in FIG. 7 is merely an example. The relationship may not be simply proportional to the stroke amount (operation amount) of the accelerator grip lever 14, and other shapes may be possible. In addition, although the driving torque is described to be constant at Tmax in the power drive mode, the driving torque may be changed depending on the operation amount of the accelerator grip lever. The power-mode determination amount may not be set at 90%, and any other value may be employed.

Furthermore, although the present invention has been described with the example in which the present invention is applied to the electric vehicle in the above description, there is no intention to limit the technical scope of the present invention to the electric vehicle. The present invention may be applied to an engine vehicle.

In addition, in the above description, although the description has been given to a case in which the driving torque is increased when the driver closes his/her fingers while holding the grip bar part 13 and pulls the accelerator grip lever 14 towards himself/herself, the driving torque may be increased when the driver opens his/her fingers and pushes the accelerator grip lever 14.

In addition, the above-mentioned embodiments may be combined appropriately.

## Claims

1. A steering wheel comprising:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part and extends in vertical direction;
a right grip bar part that is fixed to the right spoke part and extends in the vertical direction; and
an accelerator grip lever that is provided: so as to extend in the vertical direction behind one grip bar part of the left grip bar part and the right grip bar part when viewed by a driver from a front; such that at least a part of the accelerator grip lever is hidden by the one grip bar part; and so as to be closer to the base part than the one grip bar part, the accelerator grip lever being configured to approach the one grip bar part, when the driver adjusts driving force for the wheel, by undergoing a stroke in a direction moving away from the base part, when viewed in a top view of the steering wheel, about an upper end serving as a rotation center as the accelerator grip lever is operated by being held together with the one grip bar part.

2. A steering wheel comprising:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part;
a right grip bar part that is fixed to the right spoke part; and
an accelerator grip lever that is provided such that a base portion is provided on the base part at a location further away from a driver seat than the left grip bar part and the right grip bar part, the accelerator grip lever being configured such that, when a driver adjusts driving force for a wheel, as the driver closes a finger and pulls the accelerator grip lever towards the driver in a state holding a one grip bar part of the left grip bar part and the right grip bar part, a contact area contacting with the finger of the driver is reduced, and the accelerator grip lever returns to a non-operated initial state by being detached from the finger tip of the driver as the driver further closes the finger beyond a full stroke position.

3. The steering wheel according to claim 1 or claim 2, further comprising:
a left horn switch that is provided at a location where the driver can operate the left horn switch with thumb of a left hand in a state holding the left grip bar part; and
a right horn switch that is provided at a location where the driver can operate the right horn switch with thumb of a right hand in a state holding the right grip bar part.

4. The steering wheel according to any one of claim 1 to claim 3, further comprising
an accelerator grip lever that is arranged at a left-right symmetrical location about a center line of the steering wheel as an axis of symmetry with respect to the accelerator grip lever operated in a state holding the one grip bar part, the accelerator grip lever being configured to be operated, when the driver adjusts the driving force for the wheel, in a state holding an other grip bar part of the left grip bar part and the right grip bar part.

5. A control device of a vehicle using the steering wheel according to claim 4 comprising:,
a one operation-amount detection unit configured to detect an operation amount of the accelerator grip lever that is operated in a state holding the one grip bar part;
an other operation-amount detection unit configured to detect the operation amount of the accelerator grip lever that is operated in a state holding the other grip bar part; and
a drive-mode setting unit configured to set a drive mode to a power drive mode if both of the operation amount of the accelerator grip lever detected by the one operation-amount detection unit and the operation amount of the accelerator grip lever detected by the other operation-amount detection unit are larger than a power-mode determination amount, and to set the drive mode to a normal drive mode if at least one of the operation amounts detected is smaller than the power-mode determination amount.

6. A control device of a vehicle using the steering wheel according to claim 4 comprising:
a one operation-amount detection unit configured to detect an operation amount of the accelerator grip lever that is operated in a state holding the one grip bar part;
an other operation-amount detection unit configured to detect the operation amount of the accelerator grip lever that is operated in a state holding the other grip bar part; and
a driving-force controlling unit configured to control the driving force for the wheel based on a larger operation amount of the operation amount of the accelerator grip lever detected by the one operation-amount detection unit and the operation amount of the accelerator grip lever detected by the other operation-amount detection unit.

7. A control device of a vehicle using the steering wheel according to claim 4 comprising:
a one operation-amount detection unit configured to detect an operation amount of the accelerator grip lever that is operated in a state holding the one grip bar part;
an other operation-amount detection unit configured to detect the operation amount of the accelerator grip lever that is operated in a state holding the other grip bar part; and
a driving-force controlling unit configured to control the driving force of the wheel based on a total operation amount obtained by mutually adding products that are obtained by respectively multiplying a larger operation amount and a smaller operation amount of the operation amount of the accelerator grip lever detected by the one operation-amount detection unit and the operation amount of the accelerator grip lever detected by the other operation-amount detection unit by coefficients, which are in a mutual complementary relationship of unity.

8. A control method of a vehicle using the steering wheel according to claim 4 comprising:
a one operation-amount detection step of detecting the operation amount of the accelerator grip lever that is operated in a state holding the one grip bar part;
an other operation-amount detection step of detecting the operation amount of the accelerator grip lever that is operated in a state holding the other grip bar part; and
a drive-mode setting step of setting a drive mode to a power drive mode if both of the operation amount of the accelerator grip lever detected by the one operation-amount detection step and the operation amount of the accelerator grip lever detected by the other operation-amount detection step are larger than a power-mode determination amount, and setting the drive mode to a normal drive mode if at least one of the operation amounts detected is smaller than the power-mode determination amount.

9. A control method of a vehicle using the steering wheel according to claim 4 comprising:
a one operation-amount detection step of detecting the operation amount of the accelerator grip lever that is operated in a state holding the one grip bar part;
an other operation-amount detection step of detecting the operation amount of the accelerator grip lever that is operated in a state holding the other grip bar part; and
a driving-force controlling step of controlling the driving force for the wheel based on a larger operation amount of the operation amount of the accelerator grip lever detected by the one operation-amount detection step and the operation amount of the accelerator grip lever detected by the other operation-amount detection step.

10. A control method of a vehicle using the steering wheel according to claim 4 comprising:
a one operation-amount detection step of detecting the operation amount of the accelerator grip lever that is operated in a state holding the one grip bar part;
an other operation-amount detection step of detecting the operation amount of the accelerator grip lever that is operated in a state holding the other grip bar part; and
a driving-force controlling step of controlling the driving force for the wheel based on a total operation amount obtained by mutually adding products that are obtained by respectively multiplying a larger operation amount and a smaller operation amount of the operation amount of the accelerator grip lever detected by the one operation-amount detection step and the operation amount of the accelerator grip lever detected by the other operation-amount detection step by coefficients, which are in a mutual complementary relationship of unity.

11. A control device for a vehicle using a steering wheel provided with:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part;
a right grip bar part that is fixed to the right spoke part;
an accelerator grip lever configured to be operated, when a driver adjusts driving force for the wheel, in a state holding a one grip bar part of the left grip bar part and the right grip bar part; and
an accelerator grip lever configured to be operated, when the driver adjusts the driving force for the wheel, in a state holding an other grip bar part of the left grip bar part and the right grip bar part, wherein the vehicle control device comprises:
a one operation-amount detection unit configured to detect an operation amount of the accelerator grip lever that is operated in a state holding the one grip bar part;
an other operation-amount detection unit configured to detect the operation amount of the accelerator grip lever that is operated in a state holding the other grip bar part; and
a drive-mode setting unit configured to set a drive mode to a power drive mode in which the driving torque is maximized if both of the operation amount of the accelerator grip lever detected by the one operation-amount detection unit and the operation amount of the accelerator grip lever detected by the other operation-amount detection unit are larger than a power-mode determination amount, and configured to set, if at least one of the operation amounts detected is smaller than the power-mode determination amount, the drive mode to a normal drive mode in which the driving torque is set to be proportional to a larger operation amount of the operation amount of the accelerator grip lever detected by the one operation-amount detection unit and the operation amount of the accelerator grip lever detected by the other operation-amount detection unit.

12. A control device of a vehicle using a steering wheel provided with:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part;
a right grip bar part that is fixed to the right spoke part;
an accelerator grip lever configured to be operated, when a driver adjusts driving force for the wheel, in a state holding a one grip bar part of the left grip bar part and the right grip bar part; and
an accelerator grip lever configured to be operated, when the driver adjusts the driving force for the wheel, in a state holding an other grip bar part of the left grip bar part and the right grip bar part, wherein the vehicle control device comprises:
a one operation-amount detection unit configured to detect an operation amount of the accelerator grip lever that is operated in a state holding the one grip bar part;
an other operation-amount detection unit configured to detect the operation amount of the accelerator grip lever that is operated in a state holding the other grip bar part; and
a driving-force controlling unit configured to control the driving force for the wheel based on a total operation amount that is obtained by: obtaining a product by multiplying a larger operation amount of the operation amount of the accelerator grip lever detected by the one operation-amount detection unit and the operation amount of the accelerator grip lever detected by the other operation-amount detection unit by a first coefficient, which has been given in advance as a constant value; obtaining a product by multiplying a smaller operation amount by a second coefficient, which is smaller than and is in a complementary relationship of unity with the first coefficient; and adding both products.

13. A control method of a vehicle using a steering wheel provided with:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part;
a right grip bar part that is fixed to the right spoke part;
an accelerator grip lever configured to be operated, when a driver adjusts driving force for the wheel, in a state holding a one grip bar part of the left grip bar part and the right grip bar part; and
an accelerator grip lever configured to be operated, when the driver adjusts the driving force for the wheel, in a state holding an other grip bar part of the left grip bar part and the right grip bar part, wherein the vehicle control method comprises:
a one operation-amount detection step of detecting the operation amount of the accelerator grip lever that is operated in a state holding the one grip bar part;
an other operation-amount detection step of detecting the operation amount of the accelerator grip lever that is operated in a state holding the other grip bar part; and
a drive-mode setting step of setting a drive mode to a power drive mode in which the driving torque is maximized if both of the operation amount of the accelerator grip lever detected by the one operation-amount detection step and the operation amount of the accelerator grip lever detected by the other operation-amount detection step are larger than a power-mode determination amount, and setting, if at least one of the operation amounts detected is smaller than the power-mode determination amount, the drive mode to a normal drive mode in which the driving torque is set to be proportional to a larger operation amount of the operation amount of the accelerator grip lever detected by the one operation-amount detection step and the operation amount of the accelerator grip lever detected by the other operation-amount detection step.

14. A control method of a vehicle using a steering wheel provided with:
a base part that is connected to a steering shaft for adjusting steering angle of a wheel;
a left spoke part that is fixed to the base part and extends in left direction;
a right spoke part that is fixed to the base part and extends in right direction;
a left grip bar part that is fixed to the left spoke part;
a right grip bar part that is fixed to the right spoke part;
an accelerator grip lever configured to be operated, when a driver adjusts driving force for the wheel, in a state holding a one grip bar part of the left grip bar part and the right grip bar part; and
an accelerator grip lever configured to be operated, when the driver adjusts the driving force for the wheel, in a state holding an other grip bar part of the left grip bar part and the right grip bar part, wherein the vehicle control method comprises:
a one operation-amount detection step of detecting the operation amount of the accelerator grip lever that is operated in a state holding the one grip bar part;
an other operation-amount detection step of detecting the operation amount of the accelerator grip lever that is operated in a state holding the other grip bar part; and
a driving-force controlling step of controlling the driving force for the wheel based on a total operation amount that is obtained by: obtaining a product by multiplying a larger operation amount of the operation amount of the accelerator grip lever detected by the one operation-amount detection step and the operation amount of the accelerator grip lever detected by the other operation-amount detection step by a first coefficient, which has been given in advance as a constant value; obtaining a product by multiplying a smaller operation amount by a second coefficient, which is smaller than and is in a complementary relationship of unity with the first coefficient; and adding both products.

15. (Deleted)
